# EUROPEAN PATENT APPLICATION

(11) **EP 4 353 771 A1**
(43) Date of publication of application: **17.04.2024**
(21) Application number: 22832656.7
(22) Date of filing: 25.05.2022
(51) Int. Cl.: C08H 7/00, B41M 5/333

(54) **KRAFT LIGNIN, THERMOSENSITIVE RECORDING DEVELOPER, AND THERMOSENSITIVE RECORDING MATERIAL**

(30) Priority: 30.06.2021 JP 2021108546
(71) Applicant: Nicca Chemical Co., Ltd., Fukui-shi, Fukui 910-8670 (JP)
(72) Inventor: MORI Yasuo, Fukui-shi, Fukui 910-8670 (JP); ICHIMURA Kenta, Fukui-shi, Fukui 910-8670 (JP); SAITO Hajime, Fukui-shi, Fukui 910-8670 (JP); YOSHIDA Takeshi, Fukui-shi, Fukui 910-8670 (JP); SUGIMOTO Masashige, Fukui-shi, Fukui 910-8670 (JP)
(74) Representative: Boult Wade Tennant LLP
(86) International application number: PCT/JP2022/021347
(87) International publication number: WO 2023/276498

(57) **Abstract**

In a kraft lignin according to the present disclosure, the content of dimethyl disulfide is 2.5 ppm or less.

## Description

### Technical Field

The present disclosure relates to a kraft lignin, a thermosensitive recording developer, and a thermosensitive recording material.

### Background Art

Conventionally, thermosensitive recording materials having a thermosensitive coloring layer provided on a support have been used. The thermosensitive coloring layer contains an electron-donating coloring substance and an electron-accepting developer as main components, and, when the thermosensitive coloring layer is heated, the coloring substance and the developer instantly react with each other to form an image portion. Such thermosensitive recording materials make it possible to obtain records with a relatively simple device including heating means such as a thermal head, a thermal pen or a laser light and have an advantage of easy maintenance of recording devices, a low frequency of noise generation during recording or the like. Therefore, thermosensitive recording materials are being used as recording media for thermal printers of a variety of mobile terminals and the like, medical image printers that come with ultrasonic echoes or the like, thermo pen recorders of electrocardiograms, analysis equipment and the like. In addition, thermosensitive recording materials are also being used in applications of the POS labels of air tickets, tickets and products and the like.

As the developer, bisphenols, alkylphenols, novolac-type phenolic resins, aromatic carboxylic acid derivatives and metal salts thereof, hydroxybenzoic acid esters, sulfonylurea-based compounds, activated clay and the like are ordinarily used. Bisphenols are in wide use from the viewpoint of the performance of thermosensitive recording materials such as coloring properties or image portion preservability and the cost such as the price.

In recent years, due to the increasing environmental awareness, there has been a demand for replacement with non-bisphenolic developers as environmentally friendly developers on the background of discussion of the potential influence of bisphenols, mainly bisphenol A, on environments.

Amid such a situation, Patent Literature 1 discloses a thermosensitive recording body provided with a thermosensitive recording layer, in which an isolated lignin is contained as an electron-accepting developer.

### Citation List

### Patent Literature

[Patent Literature 1] Japanese Unexamined Patent Publication No. 2020-104274

### Summary of Invention

### Technical Problem

Here, the isolated lignin is normally obtained by the chemical modification of a lignin that has been composited with a polysaccharide such as cellulose. The isolated lignin to be obtained differs with the chemical modification that has been performed on the lignin. Examples of such an isolated lignin include lignosulfonic acid (salt), kraft lignin, soda lignin, soda-anthraquinone lignin, organosol lignin, blasted lignin and sulfuric acid lignin.

Kraft lignin is derived from wood and is thus environmentally friendly. However, according to the present inventors' studies, it has been clarified that, when a thermosensitive recording material for which kraft lignin is used as a developer is heated to form an image portion, an unpleasant odor that is not sensible from kraft lignin in an isolated state (hereinafter, also referred to as "unpleasant odor") is generated.

An objective of one aspect of the present invention is to provide a thermosensitive recording material from which an unpleasant odor is less likely to be sensed at the time of forming an image portion while kraft lignin is used as a developer, a kraft lignin enabling the realization of the above-described thermosensitive recording material and a thermosensitive recording developer containing the kraft lignin.

### Solution to Problem

As a result of repeating intensive studies to solve the above-described problem, the present inventors specified, among a variety of components in kraft lignin, dimethyl disulfide as a cause of the unpleasant odor that is sensed at the time of forming an image portion. In addition, the present inventors found that, when kraft lignin is purified by heating the kraft lignin and water and performing the azeotropic distillation of dimethyl disulfide with water, and the content of dimethyl disulfide in the kraft lignin is made to be a specific concentration or lower, it is possible to make the unpleasant odor at the time of forming image portions less likely to be sensed from thermosensitive recording materials to be obtained and completed the present invention bases on such a finding.

That is, one aspect of the present invention is a kraft lignin in which a content of dimethyl disulfide is 2.5 ppm or less. Thermosensitive recording materials for which such a kraft lignin is used as a developer make it possible for the unpleasant odor to be less likely to be sensed at the time of forming image portions.

In addition, thermosensitive recording materials for which such a kraft lignin is used have sufficient coloring properties, and image portions are excellent in terms of preservability such as alcohol resistance and water resistance.

Another aspect of the present invention is a thermosensitive recording developer containing the kraft lignin.

Still another aspect of the present invention is a thermosensitive recording material including a support and a thermosensitive coloring layer provided on the support,
in which the thermosensitive coloring layer contains a coloring substance and the developer.

### Advantageous Effects of Invention

According to one aspect of the present invention, it is possible to provide a thermosensitive recording material from which an unpleasant odor is less likely to be sensed at the time of forming an image portion while kraft lignin is used as a developer, a kraft lignin enabling the realization of the above-described thermosensitive recording material and a thermosensitive recording developer containing the kraft lignin.

### Description of Embodiments

Hereinafter, an embodiment of the present invention will be described. However, the present invention is not limited to the following embodiment.

### (Kraft lignin)

First, a kraft lignin according to one embodiment will be described.

In the kraft lignin according to the present embodiment, the content of dimethyl disulfide is 2.5 ppm or less. The kraft lignin is an isolated lignin that is obtained by treating lignin by a kraft method. The kraft method is a separation method in which lignin is chemically modified with sodium hydroxide (NaOH), sodium sulfide (Na₂S) and the like. The kraft lignin has a thiol group.

A method for measuring the content of dimethyl disulfide in the kraft lignin according to the present embodiment is measured using a head space-gas chromatograph/mass spectrometer.

The content of dimethyl disulfide in the kraft lignin according to the present embodiment is 2.5 ppm or less, but is preferably 2.0 ppm or less and more preferably 1.5 ppm or less since the generation of an unpleasant odor from a thermosensitive recording material to be obtained can be further suppressed. On the other hand, in a case where the content of dimethyl disulfide exceeds 2.5 ppm, an unpleasant odor can be sensed when a thermosensitive recording material to be obtained is heated to form an image portion.

The kraft lignin according to the present embodiment can be obtained by purifying unpurified kraft lignin. A method for purifying such unpurified kraft lignin may be a method in which a treatment liquid containing kraft lignin and water is heated and the azeotropic distillation of dimethyl disulfide with water is performed, whereby dimethyl disulfide is distilled together with water. This makes it possible to remove dimethyl disulfide from the treatment liquid.

In the above-described purification method, an organic solvent and/or a dispersant may be further added to the treatment liquid containing the kraft lignin and water to an extent that the effect of the present invention is not impaired. The organic solvent is preferably a solvent that is compatible with water in a certain proportion, and preferable examples thereof include alcohols such as ethanol and ketones such as ethyl acetate. The dispersant is preferably capable of improving the dispersibility of lignin in the solvent, and examples thereof include nonionic surfactants, anionic surfactants, cationic surfactants and amphoteric surfactants.

The concentration of the kraft lignin in the purification method is preferably 5 to 40 mass%, more preferably 10 to 30 mass% and still more preferably 15 to 25 mass% based on the total amount of the treatment liquid. When the concentration of the kraft lignin is 5 mass% or higher, there is a tendency that the production efficiency improves. When the concentration of the kraft lignin is 40 mass% or lower, the viscosity of the treatment liquid decreases, and the fluidity is secured, and thus there is a tendency that the kraft lignin can be stably purified.

In the purification method, the heating time from the beginning of distillation is preferably 30 minutes to 10 hours, more preferably one to eight hours and still more preferably three to six hours. When the heating time is 30 minutes or longer, there is a tendency that the content of dimethyl disulfide in kraft lignin to be obtained decreases. In addition, when the heating time is 10 hours or shorter, there is a tendency that the removal rate of dimethyl disulfide per unit time is high and the purification efficiency is high.

In the purification method, nitrogen gas may be introduced into the treatment liquid. In the case of introducing nitrogen gas, the nitrogen gas flow rate is preferably 1 to 100 mL/min, more preferably 5 to 50 mL/min and still more preferably 10 to 40 mL/min per liter of the container volume. When the nitrogen gas flow rate is 1 mL/min or faster, there is a tendency that the distillation rate increases and the content of dimethyl disulfide in kraft lignin to be obtained decreases. In addition, when the nitrogen gas flow rate is 100 mL/min or slower, there is a tendency that an increase in the production cost can be suppressed.

### (Developer)

Next, a developer according to one embodiment will be described.

A thermosensitive recording developer according to the present embodiment contains the kraft lignin according to the present embodiment. The developer may or may not contain components other than the kraft lignin according to the present embodiment.

Such components other than the kraft lignin are not particularly limited, and examples thereof include a solvent and an additive.

Examples of the solvent include water and an organic solvent. The content of the solvent is, for example, 5 mass% or less, 3 mass% or less or 1 mass% or less based on the total amount of the developer.

Examples of the additive include a dispersant and an anti-foaming agent. The content of the additive is, for example, 5 mass% or less, 3 mass% or less or 1 mass% or less based on the total amount of the developer.

The content (purity) of the kraft lignin that is contained in the developer is, for example, 95 mass% or more, 97 mass% or more, 99 mass% or more or 100 mass% based on the total amount of the developer.

### (Thermosensitive recording material)

Next, a thermosensitive recording material according to one embodiment will be described.

The thermosensitive recording material according to the present embodiment includes a support and a thermosensitive coloring layer provided on the support. The thermosensitive coloring layer contains a coloring substance and the developer according to the above-described embodiment.

The support is not particularly limited, and, for example, paper such as neutral paper and acidic paper, recycled paper using waste paper pulp, synthetic paper, a film, a non-woven fabric, a woven fabric and the like can be used.

As the coloring substance, a colorless or light-colored leuco dye can be used. Examples of the leuco dye include fluoran derivatives, quinazoline derivatives, phthalide derivatives, triphenylmethane derivatives and phenothiazine derivatives. These leuco dyes can be used singly or two or more thereof can be used in combination.

Among these leuco dyes, a leuco dye having a fluoran structure can be particularly suitably used since the coloring properties are favorable. Examples of the leuco dye having a fluoran structure include 3-isoamylethylamino-6-methyl-7-anilinofluoran, 3-(N-(4-methylphenyl)-N-ethyl)amino-6-methyl-7-anilinofluoran, 3-diamylamino-6-methyl-7-anilinofluoran, 3-dibutylamino-6-methyl-7-anilinofluoran, 3-diethylamino-6-methyl-7-anilinofluoran and 3-cyclohexylmethylamino-6-methyl-7-anilinofluorane.

The content of the coloring substance in the thermosensitive coloring layer can be set as appropriate depending on the characteristics of an intended thermosensitive recording material. The content of the coloring substance may be, for example, 1 to 30 mass%, may be 5 to 20 mass% or may be 8 to 18 mass% based on the total amount of the thermosensitive coloring layer.

Regarding the content of the developer according to the present embodiment in the thermosensitive coloring layer, the content of the kraft lignin in the developer is preferably 10 to 500 parts by mass, more preferably 50 to 400 parts by mass, still more preferably 100 to 300 parts by mass and particularly preferably 140 to 210 parts by mass with respect to 100 parts by mass of the coloring substance from the viewpoint of obtaining a thermosensitive recording material having sufficient coloring properties.

The thermosensitive coloring layer may further contain a sensitizer. The sensitizer is not particularly limited, but is preferably a sensitizer having a melting point of 90°C to 140°C. Examples of such a sensitizer include fatty acid amides such as stearic acid amide, ethers such as 1,2-bisphenoxyethane, 1,2-bis(m-tolyloxy)ethane and 2-benzyloxynaphthalene, esters such as di(4-methylbenzyl) oxalate, sulfonamides such as N-phenylsulfonamide, sulfonic acid esters such as toluenesulfonic acid naphthyl ester, aromatic hydrocarbon compounds such as m-terphenyl and p-benzylbiphenyl, a variety of waxes, condensates of an aromatic carboxylic acid and an amine, higher linear glycols, higher ketones, diphenyl sulfone, p-hydroxybenzoic acid esters, phthalic acid diesters and the like. These sensitizers can be used singly or two or more thereof can be used in combination.

The thermosensitive coloring layer may further contain an image stabilizer. The image stabilizer is not particularly limited, and examples thereof include 4-benzyloxy-4'-(2-methylglycidyloxy)diphenylsulfone, 1,1,3-tris(2-methyl-4-hydroxy-5-cyclohexylphenyl)butane, 1,1,3-tris(2-methyl-4-hydroxy-5-tert-butylphenyl)butane and commercially available TOMIRAC 214 (trade name, manufactured by Mitsubishi Chemical Corporation). These image stabilizers can be used singly or two or more thereof can be used in combination.

The thermosensitive coloring layer may further contain a loading material as necessary. Examples of the loading material include inorganic fillers and organic fillers.

The thermosensitive coloring layer may further contain other additives as necessary. Examples of the other additives include a lubricant, an ultraviolet absorber, a waterproofing agent, a dispersant, an anti-foaming agent, an antioxidant and a fluorescent dye.

A method for producing the thermosensitive recording material according to the present embodiment is not particularly limited, and the thermosensitive recording material can be produced by, for example, dispersing a coloring substance, a developer component containing the developer according to the embodiment, a stabilizer, an image stabilizing substance and other components that are added as necessary in a medium such as an aqueous medium together with an appropriate binder to prepare a coating liquid of a thermosensitive coloring layer, applying and drying this coating layer on a support.

A dispersion liquid containing the coloring substance, the developer and the sensitizer can be prepared by separately preparing each of a dispersion liquid containing the coloring substance, a dispersion liquid containing the developer and a dispersion liquid containing a sensitizing substance and then mixing these dispersion liquids together. It is desirable that the coloring substance, the developer and the sensitizer are dispersed in a fine particle form in each dispersion liquid. In the preparation of such dispersion liquids, it is possible to use, for example, a sand mill and a ball mill.

The binder is not particularly limited, and examples thereof include cellulose derivatives such as hydroxyethyl cellulose and carboxymethyl cellulose, polyvinyl alcohols such as polyvinyl alcohol and modified polyvinyl alcohol, gelatin, casein, starch, polyacrylic acid, polyacrylic acid esters, polyvinyl acetate, polyacrylamide, styrene-maleic acid copolymers, styrene-butadiene copolymers, polyamide resins, petroleum resins and terpene resins. These binders can be used singly or two or more thereof can be used in combination.

In the thermosensitive recording material according to the present embodiment, for example, an undercoat layer containing at least one of an inorganic filler and an organic filler can be provided as necessary. Furthermore, an overcoat layer that is formed of a water-soluble resin such as a cellulose derivative or a polyvinyl alcohol, a water-soluble emulsion resin such as a styrene-butadiene copolymer, a water-insoluble resin or a material obtained by adding a loading material, an isocyanate, a monomer or oligomer of an unsaturated compound or the like or a crosslinking agent to the above-described resin can be provided on the thermosensitive coloring layer as necessary.

The thermosensitive recording material according to the present embodiment can be made into a thermosensitive multicolor recording material in which multiple coloring layers containing coloring substances with different tones are formed.

### [Examples]

Hereinafter, the present disclosure will be more specifically described based on examples, but the present disclosure is not limited to the following examples.

### [Purification of kraft lignin]

### (Example 1)

Kraft lignin was purified by a method in which a treatment liquid containing the kraft lignin and water was heated and the azeotropic distillation of dimethyl disulfide with water was performed (hereinafter, also referred to as "purification method 1"). Specifically, first, 160 g of kraft lignin (manufactured by MeadWestvaco Corporation, INDULIN AT) and 640 g of distilled water were injected into a 1 L separable flask to obtain a treatment liquid. In the separable flask, a cooling device for a distillate and a nitrogen introduction tube capable of introducing nitrogen into a mixture were installed. The separable flask was installed on an oil bath. The treatment liquid was heated with the oil bath to increase the temperature and heated until six hours had passed from the beginning of the distilling of water. The temperature of the oil bath was set to 120°C. During the heating, the treatment liquid was stirred and mixed while nitrogen was introduced into the treatment liquid at a flow rate of 20 mL/min. After six hours elapsed, the treatment liquid was air-cooled to 50°C. Next, the air-cooled treatment liquid was suction-filtered using a Buchner funnel to obtain a filtrate. The obtained filtrate was taken out and dried, thereby obtaining purified kraft lignin. The filtrate was dried using a PERFECT OVEN PHH-200 (trade name, manufactured by ESPEC Corp.), the temperature was set to 60°C, and the time was set to 18 hours.

### (Examples 2 to 5 and Comparative Example 1)

Purified kraft lignin was obtained in the same manner as in Example 1 except that the heating time of the mixture from the beginning of the distillation of the mixture, the nitrogen gas flow rate and the temperature of the oil bath were set to values shown in Table 1.

### (Comparative Example 2)

Kraft lignin was purified by the purification method 1. Specifically, first, 160 g of kraft lignin (manufactured by MeadWestvaco Corporation, INDULIN AT) and 640 g of distilled water were injected into a 1 L separable flask to obtain a treatment liquid. In the separable flask, a cooling device for a distillate having a vacuum suction device in an open area direction and a nitrogen introduction tube capable of introducing nitrogen into a liquid were installed. The separable flask was installed on an oil bath. The treatment liquid was heated with the oil bath to increase the temperature and heated until one hour had passed from the beginning of the distilling of water. The temperature of the oil bath was set to 72°C. During the heating, the pressure reduction degree was set to 30 kPa, and the treatment liquid was stirred and mixed. After one hour elapsed, the treatment liquid was air-cooled to 50°C, and then the pressure in the flask was returned to normal pressure. Next, purified kraft lignin was obtained from the air-cooled treatment liquid in the same manner as in Example 1.

### (Comparative Example 3)

Kraft lignin was purified by mixing the kraft lignin and a solvent and filtering a treatment liquid to be obtained (hereinafter, also referred to as purification method 2). Specifically, first, 160 g of kraft lignin (manufactured by MeadWestvaco Corporation, INDULIN AT) and 640 g of distilled water were injected into a 1 L separable flask to obtain a treatment liquid. The obtained treatment liquid was stirred and mixed for two hours. The temperature of the treatment liquid under stirring was 25°C. Next, the stirred treatment liquid was suction-filtered using a Buchner funnel to obtain a filtrate. Kraft lignin purified in the same manner as in Example 1 was obtained from the obtained filtrate.

### (Comparative Example 4)

Kraft lignin was purified by mixing the kraft lignin and a solvent, filtering a treatment liquid to be obtained and washing the obtained filtrate with water (hereinafter, also referred to as purification method 3). The filtrate obtained by mixing the kraft lignin and the solvent and filtering the treatment liquid to be obtained corresponds to the purified kraft lignin obtained in Comparative Example 3.

Specifically, first, 160 g of kraft lignin (manufactured by MeadWestvaco Corporation, INDULIN AT) and 640 g of distilled water were injected into a 1 L separable flask to obtain a treatment liquid. The obtained treatment liquid was stirred and mixed for two hours. The temperature of the treatment liquid under stirring was 25°C. Next, the stirred treatment liquid was suction-filtered using a Buchner funnel to obtain a filtrate. The filtrate obtained on a glass Nutsche filter was washed with 320 g of distilled water (25°C) under suctioning. The washed filtrate was taken out and dried, thereby obtaining purified kraft lignin. The filtrate was dried using a PERFECT OVEN PHH-200 (trade name, manufactured by ESPEC Corp.), the temperature was set to 60°C, and the time was set to 18 hours.

### (Comparative Examples 5 and 6)

Purified kraft lignin was obtained in the same manner as in Comparative Example 4 except that the temperature of the distilled water for washing the filtrate was set to a temperature shown in Table 2.

### (Comparative Example 7)

Purified kraft lignin was obtained in the same manner as in Comparative Example 3 except that ethyl acetate was used in place of the distilled water.

### (Comparative Example 8)

Purified kraft lignin was obtained in the same manner as in Comparative Example 3 except that a sulfuric acid aqueous solution (pH = 2) composed of sulfuric acid and distilled water was used in place of the distilled water.

### (Comparative Example 9)

Purified kraft lignin was obtained in the same manner as in Comparative Example 4 except that the treatment liquid was adjusted using a sulfuric acid aqueous solution (pH = 2) composed of sulfuric acid and distilled water in place of the distilled water and the filtrate was washed using the sulfuric acid aqueous solution (pH = 2) composed of sulfuric acid and distilled water in place of the distilled water.

### [Method for measuring content of dimethyl disulfide]

### <Examples 1 to 5 and Comparative Examples 1 to 9>

### (Creation of calibration curve)

As a standard substance, dimethyl disulfide (purity: 99.0%, manufactured by Fujifilm Wako Pure Chemical Corporation) was precisely weighed using an electronic balance (SARTORIUS A200S, manufactured by Sartorius AG) and sequentially diluted with ethanol (purity: 99.5%, manufactured by Fujifilm Wako Pure Chemical Corporation), thereby fabricating standard solutions having concentrations of 0.200 mg/g, 0.100 mg/g, 0.020 mg/g and 0.004 mg/g. 0.01 g of each of the obtained standard solutions was weighed in a 22 mL vial, and head space-GC-MS was performed thereon. A calibration curve was created from the integral value of peaks at holding times of 11.5 to 11.6 minutes corresponding to dimethyl disulfide, which were obtained by measurement.

### (Measurement of sample)

0.4 g of the kraft lignin purified in each of the examples and the comparative examples was precisely weighed and injected into a 22 mL vial. In addition, 0.01 g of the ethanol that was used at the time of fabricating the standard solutions was added to the vial, the vial was closed, and head space-GC-MS was performed in the same manner as for the measurement of the standard solutions. The content of dimethyl disulfide was calculated using the integral value of the peaks at the holding times of 11.5 to 11.6 minutes corresponding to dimethyl disulfide, which were obtained by measurement, and the calibration curve. The results are shown in Tables 1 and 2.

The details of the measurement conditions in the head space GC-MS are as described below.

### (Measurement conditions)

Device: Agilent 7697-7890A/5975C (head space-GC-MS)
Column: Trade name VF-1301ms (6% cyanopropylphenyl-94% dimethylpolysiloxane)
Head space vial capacity: 22 mL
Head space oven equilibration temperature: 100°C
Roof temperature: 120°C
Transfer line temperature: 180°C
Head space oven equilibration time: For 20 minutes
Cycle time: For 32 minutes
GC inlet temperature: 250°C
Split ratio: 30:1
GC initial temperature: 40°C (held for three minutes)
GC temperature rise rate: 10°C per minute
GC final temperature: 220°C (held for six minutes)
MS ion source temperature: 230°C
MS quadrupole temperature: 150°C
Carrier gas: Helium
Carrier gas flow rate: 1 mL/min
Imported MS range: 30 to 350

### <Comparative Example 10>

The content of dimethyl disulfide was calculated in the same manner as in Example 1 except that kraft lignin (INDULIN AT) was used in place of the purified kraft lignin. The result is shown in Table 2.

### [Fabrication of thermosensitive recording material]

### <Examples 1 to 5 and Comparative Examples 1 to 9>

### (1) Coating liquid for forming underlayer

| | | |
|---|---|---|
| Calcined kaolin | | 20.0 parts by mass |
| 10 mass% polyvinyl alcohol aqueous solution | | |
| | | 30.0 parts by mass |
| Dispersant (acetylene glycol-based nonionic surfactant) | | |
| | | 0.3 parts by mass |
| Binder (polyvinyl acetate emulsion, solid content: 40 mass%) | | |
| | | 18.0 parts by mass |
| Distilled water | | 31.7 parts by mass |
| | A total of 100.0 parts by mass | |

A mixture composed of the above-described composition was mixed and stirred using a homodisper, thereby preparing a coating liquid for forming an underlayer.

### (2) Coating liquid for forming thermosensitive coloring layer

An A liquid (developer dispersion liquid) and a B liquid (coloring substance dispersion liquid) having compositions (parts by mass) shown below were each prepared. The A liquid and the B liquid were prepared by performing wet-type dispersion using a sand mill until the average particle diameter reached approximately 0.5 µm.

A liquid (developer dispersion liquid)

| | | |
|---|---|---|
| Purified kraft lignin (developer) | | 20 parts by mass |
| 10 mass% polyvinyl alcohol aqueous solution | | 20 parts by mass |
| Distilled water | | 60 parts by mass |
| | A total of 100 parts by mass | |

B liquid (coloring substance dispersion liquid)

| | | |
|---|---|---|
| 3-Dibutylamion-6-methyl-7-anilinofluoran | 20 parts by mass | |

| | | |
|---|---|---|
| 10 mass% polyvinyl alcohol aqueous solution | | 20 parts by mass |
| Distilled water | | 60 parts by mass |
| | A total of 100 parts by mass | |

Next, a mixture composed of the following composition (parts by mass) was mixed and stirred using the homodisper, thereby preparing a coating liquid for forming a thermosensitive coloring layer.

| | | |
|---|---|---|
| A liquid | | 30 parts by mass |
| B liquid | | 15 parts by mass |
| Calcined kaolin | | 9 parts by mass |
| 2 mass% polyvinyl alcohol aqueous solution | | Residue |
| | A total of 100 parts by mass | |

The coating liquid for forming an underlayer was applied onto high-quality paper having a basis weight of 65 g/m² with a bar coater so that the wet application amount reached approximately 23 g/m² and air-dried, and a calendar treatment was performed thereon, thereby fabricating a support provided with an underlayer. At that time, the coating liquid for forming a thermosetting coloring layer was applied onto a surface of the support on which the underlayer was provided so that the wet application amount reached approximately 22 g/m² and air-dried, and a calendar treatment was performed thereon to form a thermosensitive coloring layer, thereby fabricating a thermosensitive recording material.

### <Comparative Example 10>

A thermosetting recording material was fabricated in the same manner as in Example 1 except that kraft lignin (manufactured by MeadWestvaco Corporation, INDULIN AT) was used in place of the purified kraft lignin.

### [Evaluation of thermosensitive recording material]

### <Determination of odor at the time of forming image portion>

The thermosensitive recording materials fabricated in the examples and the comparative examples were evaluated by the following methods.

Coloring was performed using a thermosensitive paper printing evaluation tester (trade name: "TH-M2/PS", manufactured by Okura Engineering Co., Ltd.) with a print voltage of 20 V and a pulse width of 3 ms to form an image portion. For the image portion of the thermosensitive recording material immediately after being taken out from the device, sensory evaluation was performed on an odor according to the following criteria by bringing the thermosensitive recording material close to a distance from the nose of approximately 10 cm. The average value of the numerical values of determination results from six evaluators was regarded as the comprehensive determination result. The results are shown in Tables 1 and 2.

### (Determination criteria)

5: An odor is not or rarely sensed.
4: An odor is slightly sensed, but is not sensed as an unpleasant odor.
3: An unpleasant odor is slightly sensed.
2: An unpleasant odor is sensed.
1: A quite strong unpleasant odor is sensed.

### <Coloring properties>

Coloring was performed using the thermosensitive paper printing evaluation tester (trade name: "TH-M2/PS", manufactured by Okura Engineering Co., Ltd.) with a pulse width of 3 ms and a printing energy increased every 0.07 mJ/dot to form an image portion. The color density of the formed image portion was measured with a Macbeth densitometer (trade name: "RD-918", manufactured by Macbeth). It is indicated that, as the numerical value becomes smaller, the image becomes lighter, and, as the numerical value becomes larger, the image becomes darker. The results are shown in Tables 1 and 2.

### <Alcohol resistance>

An image portion colored using the thermosensitive paper printing evaluation tester (trade name: "TH-M2/PS", manufactured by Okura Engineering Co., Ltd.) with a print voltage of 20 V and a pulse width of 3 ms was immersed in a liquid mixture of 25 parts by volume of ethanol (room temperature, 20°C) and 75 parts by weight of distilled water and left to stand for three hours. After that, the thermosensitive recording material was lifted, the surface was pressed with filter paper and naturally dried, then, the color densities of the image portion before and after the test were measured, and the residual rate (residual rate (%) = [color density after test/color density before test] × 100) was calculated and determined by the following determination criteria. The results are shown in Tables 1 and 2.

### (Determination criteria)

A: Favorable (80% or higher)
B: Slightly poor (50% or higher and lower than 80%)
C: Poor (lower than 50%)

### <Water resistance>

An image portion colored using the thermosensitive paper printing evaluation tester (trade name: "TH-M2/PS", manufactured by Okura Engineering Co., Ltd.) with a print voltage of 20 V and a pulse width of 3 ms was immersed in distilled water (room temperature, 20°C) and left to stand for 24 hours. After that, the thermosensitive recording material was lifted, the surface was pressed with filter paper and naturally dried, then, the color densities of the image portion before and after the test were measured, and the residual rate (residual rate (%) = [color density after test/color density before test] × 100) was calculated and determined by the following determination criteria. The results are shown in Tables 1 and 2.

### (Determination criteria)

A: Favorable (90% or higher)
B: Slightly poor (60% or higher and lower than 90%)
C: Poor (lower than 60%)

**[Table 1]**

| | | Example 1 | Example 2 | Example 3 | Example 4 | Example 5 | Comparative Example 1 | Comparative Example 2 |
|---|---|---|---|---|---|---|---|---|
| Purification method | | Purification method 1 | Purification method 1 | Purification method 1 | Purification method 1 | Purification method 1 | Purification method 1 | Purification method 1 |
| Pressure condition | | Normal pressure | Normal pressure | Normal pressure | Normal pressure | Normal pressure | Normal pressure | Reduced pressure |
| Solvent used | | Water | Water | Water | Water | Water | Water | Water |
| Treatment liquid temperature (°C) | | 100 | 100 | 100 | 100 | 100 | 100 | 67 |
| Oil bath temperature (°C) | | 120 | 120 | 120 | 110 | 120 | 110 | 72 |
| Nitrogen gas flow rate (mL/min) | | 20 | 20 | 20 | 20 | 0 | 0 | - |
| Treatment time (hr.) | | 6 | 2 | 1 | 1 | 6 | 1 | 1 |
| Dimethyl disulfide content (ppm) | | 0.7 | 0.9 | 1.1 | 2.2 | 2.4 | 2.8 | 2.8 |
| Odor upon image portion formation | | 4.5 | 4.5 | 4.5 | 4 | 4 | 3 | 3 |
| Coloring properties | 0.28 mJ/dot | 0.30 | 0.30 | 0.29 | 0.30 | 0.29 | 0.28 | 0.29 |
| | 0.42 mJ/dot | 0.43 | 0.43 | 0.42 | 0.42 | 0.42 | 0.42 | 0.41 |
| Image portion preservability | Alcohol resistance | A | A | A | A | A | A | A |
| | Water resistance | A | A | A | A | A | A | A |

**[Table 2]**

| | Comparative Example 3 | Comparative Example 4 | Comparative Example 5 | Comparative Example 6 | Comparative Example 7 | Comparative Example 8 | Comparative Example 9 | Comparative Example 10 | |
|---|---|---|---|---|---|---|---|---|---|
| Purification method | Purification method 2 | Purification method 3 | Purification method 3 | Purification method 3 | Purification method 2 | Purification method 2 | Purification method 3 | Unpurified | |
| Solvent used | Water | Water | Water | Water | Ethyl acetate | Sulfuric acid aqueous solution (pH = 2) | Sulfuric acid aqueous solution (pH = 2) | - | |
| Treatment liquid temperature (°C) | 25 | 25 | 25 | 25 | 25 | 25 | 25 | - | |
| Treatment time (hr.) | 2 | 2 | 2 | 2 | 2 | 2 | 2 | - | |
| Washing water temperature in purification method 3 (°C) | | - | 25 | 50 | 80 | - | - | 25 | - |
| Dimethyl disulfide content (ppm) | | 6.7 | 6.3 | 6.1 | 5.2 | 5.4 | 6.5 | 6.2 | 10.3 |
| Odor upon image portion formation | | 2 | 2 | 2 | 2 | 2 | 2 | 2 | 1 |
| Coloring properties | 0.28 mJ/dot | 0.29 | 0.29 | 0.29 | 0.29 | 0.28 | 0.29 | 0.28 | 0.28 |
| | 0.42 mJ/dot | 0.41 | 0.41 | 0.40 | 0.40 | 0.35 | 0.40 | 0.40 | 0.41 |
| Image portion preservability | Alcohol resistance | A | A | A | A | A | A | A | A |
| | Water resistance | A | A | A | A | A | A | A | A |

In each of the examples and the comparative examples, in a case where the content of dimethyl disulfide in the kraft lignin was 2.5 ppm or less, the evaluation at the time of forming the image portion was "4" or higher for all of the thermosensitive recording materials to be obtained. From the purified kraft lignin of each of the examples and the comparative examples, an unpleasant odor was not particularly sensed. In addition, it is found that, in a case where the content of dimethyl disulfide in the kraft lignin was 2.5 ppm or less, the thermosensitive recording materials to be obtained are excellent in terms of coloring properties and image portion preservability.

## Claims

1. A kraft lignin,
wherein a content of dimethyl disulfide is 2.5 ppm or less..

2. A thermosensitive recording developer comprising:
the kraft lignin according to Claim 1.

3. A thermosensitive recording material comprising:
a support; and
a thermosensitive coloring layer provided on the support, wherein the thermosensitive coloring layer contains a coloring substance and the developer according to Claim 2.
